# DEMANDE DE BREVET EUROPEEN

(11) **EP 0 813 835 A1**
(43) Date de publication de la demande: **29.12.1997**
(21) Numéro de dépôt: 97420089.1
(22) Date de dépôt: 12.06.1997
(51) Int. Cl.: A47J 31/44, A47J 31/46

(54) **Machine à café operant avec differents types de récipients**

(30) Priorité: 17.06.1996 FR 9607891
(71) Demandeur: SEB S.A., 69130 Ecully (FR)
(72) Inventeur: Estaun, Alain, 65100 Lourdes (FR)

(57) **Abrégé**

L'invention concerne une machine à boisson chaude, en particulier machine à café, avec un porte-filtre (8) pourvu d'un premier moyen de versement comportant un orifice (18), un second moyen de versement (5) comportant au moins deux orifices (24), susceptible d'occuper une première position active sous l'orifice (18) du premier moyen de versement et une seconde position escamotée. Le second moyen de versement (5) comporte des moyens d'actionnement (1,2,3,4,9,10) situés à distance du premier moyen de versement.

## Description

La présente invention se rapporte au domaine des machines à boisson chaude, du type machines à café, permettant à l'utilisateur de récupérer la boisson chaude soit dans une verseuse, soit directement dans au moins une et de préférence deux tasses préalablement disposées dans la machine par l'utilisateur.

La présente invention concerne une machine à café de type mixte comportant un boîtier avec un porte-filtre pourvu d'au moins une sortie de liquide, un moyen de versement escamotable comportant au moins deux orifices, la position de ce moyen de versement étant choisie par l'utilisateur de manière à être adaptée au type de récipient retenu.

Il a déjà été proposé, notamment dans le modèle d'utilité allemand DE- U-91 15 639, de réaliser une machine à café-filtre permettant à l'utilisateur de choisir le type de récipient dans lequel il souhaite récupérer le café chaud. Dans ce dispositif la machine à café comporte de manière classique un support chauffant pour une verseuse, ainsi qu'un porte-filtre pourvu d'un moyen anti-goutte susceptible d'être actionné par la verseuse lorsque cette dernière est mise en place sur le support. Dans cette position la verseuse déplace le moyen anti-goutte et permet l'écoulement du café par un orifice d'évacuation ménagé dans le porte-filtre. La machine à café comporte en outre un porte-filtre sur lequel est monté de manière mobile un répartiteur d'écoulement destiné à être amené par rotation en position de travail par l'utilisateur lui-même lorsqu'il souhaite récupérer le café directement dans deux tasses et non pas dans la verseuse. Le répartiteur d'écoulement se présente sous la forme d'une plaque de déflexion pourvue de deux orifices ladite plaque venant actionner l'anti-goutte en position de travail pour permettre l'écoulement du café sur la plaque et à travers les deux orifices d'évacuation.

Un tel dispositif peut permettre bien évidemment à l'utilisateur de choisir librement le récipient dans lequel il souhaite récupérer le café à partir du porte-filtre. Cependant ce dispositif adjacent au porte-filtre est situé en position de travail sous l'orifice du porte-filtre. L'utilisateur doit manipuler directement une pièce dans laquelle circule du café chaud. Afin de bénéficier d'un meilleur effet de levier, il est conduit à manipuler le dispositif préférentiellement dans sa partie basse, partie dans laquelle circule effectivement le café chaud. L'utilisateur est susceptible de se brûler ou de se tacher si du café subsiste dans le dispositif.

De plus, l'anti-goutte qui vient s'appuyer sur la partie centrale du dispositif lorsque celui-ci est en position de travail impose à l'utilisateur d'exercer un effort afin de dégager ledit dispositif de l'anti-goutte. Cet effort conduit à donner au mouvement un caractère brusque, qui sollicite mécaniquement de manière importante l'axe de rotation du dispositif. Afin de mieux contrôler le mouvement du dispositif, l'utilisateur est conduit préférentiellement à le manoeuvrer avec ses deux mains. S'il manoeuvre le dispositif dans sa partie centrale, l'utilisateur risque de heurter avec ses doigts l'anti-goutte revenant en position fermée une fois le dispositif dégagé. On voit donc que ce dispositif n'est pas d'une utilisation très aisée et que l'utilisateur est susceptible de se brûler ou de se tacher avec le café en manoeuvrant le dispositif.

En outre ce dispositif met en oeuvre un montage mécanique compliqué et fragile. Il nécessite en effet de faire supporter le dispositif de répartition par des axes support fragiles et destinés à être sollicités fréquemment. Par ailleurs, le bon fonctionnement du dispositif implique un bon ajustement dimensionnel entre le dispositif de répartition d'écoulement et le moyen anti-goutte qui doit être sollicité axialement pour dégager l'orifice d'évacuation du porte-filtre. Un tel ajustement des mouvements relatifs n'est pas aisé à obtenir sur le plan industriel d'une part, et susceptible après plusieurs utilisations de se dérégler, voire de se détériorer.

Dans le document EP- 0 622 040 est décrit une machine à café comportant un moyen anti-goutte pourvu de deux clapets de fermeture pour deux sorties de liquide distinctes, ledit moyen anti-goutte comprenant un premier moyen de commande susceptible d'être actionné automatiquement par la verseuse lorsque celle-ci est mise en place, ainsi qu'un second moyen de commande susceptible d'être actionné de préférence manuellement par l'intermédiaire d'une molette, pour amener ledit moyen anti-goutte en position stable de dégagement des deux sorties de liquide. Ce dispositif permet donc à l'utilisateur de collecter la boisson dans une verseuse ou dans deux récipients tels que des tasses. Il présente toutefois le désagrément pour l'utilisateur de ne pas être ergonomique. En effet l'action de la molette sur le moyen anti-goutte ne provoque qu'un faible déplacement de la pièce comportant les deux sorties de liquide. L'utilisateur ne détecte pas spontanément la configuration dans laquelle se trouve la cafetière et peut subir des désagréments tels que l'écoulement du café lors d'un retrait prématuré de la verseuse, si le moyen anti-goutte n'a pas été activé, ou un non fonctionnement apparent, si le moyen anti-goutte a été activé et que l'utilisateur veut récupérer le café dans une ou deux tasses.

La présente invention vise en conséquence à proposer une machine à café permettant de remédier aux différents inconvénients précités, susceptible de délivrer le café au choix dans une verseuse ou dans une ou plusieurs tasses, offrant une manipulation simple ainsi qu'une construction simple et robuste.

Ces buts sont réalisés dans une machine à boisson chaude, en particulier machine à café, comportant un boîtier avec un porte-filtre pourvu d'un premier moyen de versement comportant un orifice, un second moyen de versement comportant au moins deux orifices, susceptible d'occuper une première position active sous l'orifice du premier moyen de versement et une seconde position escamotée, caractérisée en ce que le second moyen de versement comporte des moyens d'actionnement situés à distance du premier moyen de versement.

L'utilisateur peut ainsi changer à l'aide des moyens d'actionnement la position du second moyen de versement sans avoir à manipuler celui-ci directement et sans courir le risque de renverser malencontreusement du café, de se brûler, voire de renverser une tasse lors d'un geste maladroit ou par inattention. Lorsque le second moyen de versement est placé sous l'orifice du premier moyen de versement, la boisson s'écoule dans le ou les récipients placés sous les orifices du second moyen de versement. Lorsque le second moyen de versement est placé en position escamotée, la boisson s'écoule de l'orifice du premier moyen de versement dans une verseuse.

Selon une version avantageuse de l'invention, les moyens d'actionnement comportent une manette située à distance du premier moyen de versement, pivotant autour d'un axe sensiblement perpendiculaire, ladite manette présentant une partie reliée à une bielle reliée elle-même à un élément pivotant autour d'un autre axe orienté sensiblement perpendiculairement, l'actionnement de la manette dans une première position amenant le second moyen de versement dans une position escamotée, l'actionnement de la manette dans une seconde position amenant le second moyen de versement dans une position active où ledit moyen est dans une position proéminente et visible.

L'utilisateur qui regarde la cafetière pour placer le ou les récipient(s) de son choix sait ainsi spontanément si la position dans laquelle se trouve la cafetière est celle correspondant au(x) récipient(s) qu'il souhaite utiliser. Lorsque ce n'est pas le cas, il manoeuvre la manette destinée à l'actionnement. Ladite manette est placée à distance du premier moyen de versement. Pour être à distance, on entend qu'elle est disposée hors de la zone de versement, ou de la zone immédiatement occupée par l'écoulement du café. Ainsi, de préférence, la manette est prévue de façon à présenter un relief accessible depuis une des faces de la machine, par exemple la face frontale. On aurait bien entendu pu prévoir la manette à un autre endroit, par exemple sur le dessus du porte-filtre, de façon à être accessible par le haut, loin de la zone de versement.

Avantageusement, les moyens d'actionnement sont constitués d'une seule pièce.

Le dispositif ainsi réalisé met en oeuvre un montage mécanique simple permettant à l'utilisateur de sélectionner la position souhaitée par le simple mouvement d'une manette. Les pièces du dispositif peuvent être réalisées de manière peu onéreuse par moulage. Ce dispositif a l'avantage d'être peu coûteux et d'être facilement mis en place lors du montage de l'appareil.

Selon une version avantageuse de l'invention, la partie de la manette est reliée à la bielle par un premier secteur d'épaisseur réduite permettant une flexion importante, ladite bielle étant reliée à un élément de transmission par un second secteur d'épaisseur réduite permettant une flexion importante.

Avantageusement, les moyens d'actionnement sont placés entre la paroi du porte-filtre et le boîtier, une fenêtre ménagée en partie frontale dudit boîtier permettant d'actionner la manette.

Selon une version avantageuse de l'invention, le premier moyen de versement comporte un moyen anti-goutte susceptible d'être basculé dans une position escamotée par le deuxième moyen de versement lors de son passage dans sa position active, libérant ainsi l'orifice du premier moyen de versement.

La machine ainsi réalisée permet de combiner le fonctionnement d'une machine équipée d'un anti-goutte où la boisson est collectée dans une verseuse, avec celui d'une machine conçue pour distribuer directement la boisson dans un ou plusieurs récipients.

De manière avantageuse les moyens d'actionnement sont réalisés en matériau polymère.

L'invention sera mieux comprise à l'étude du mode de réalisation pris à titre nullement limitatif et illustré dans les figures annexées dans lesquelles :
- la figure 1 est une vue en coupe transversale partielle du dispositif selon l'invention, dans laquelle le second moyen de versement est en position escamotée.
- la figure 2 est une vue en coupe transversale partielle du dispositif selon l'invention, dans laquelle le second moyen de versement est en position active.
- la figure 3 est une vue de dessous du dispositif selon l'invention, sans moyen anti-goutte, dans laquelle le second moyen de versement est en position active.
- la figure 4 est une vue générale de face d'une machine à café comportant le dispositif selon l'invention, dans laquelle le second moyen de versement est en position escamotée.
- la figure 5 est une vue générale de face d'une machine à café comportant le dispositif selon l'invention, dans laquelle le second moyen de versement est en position active.

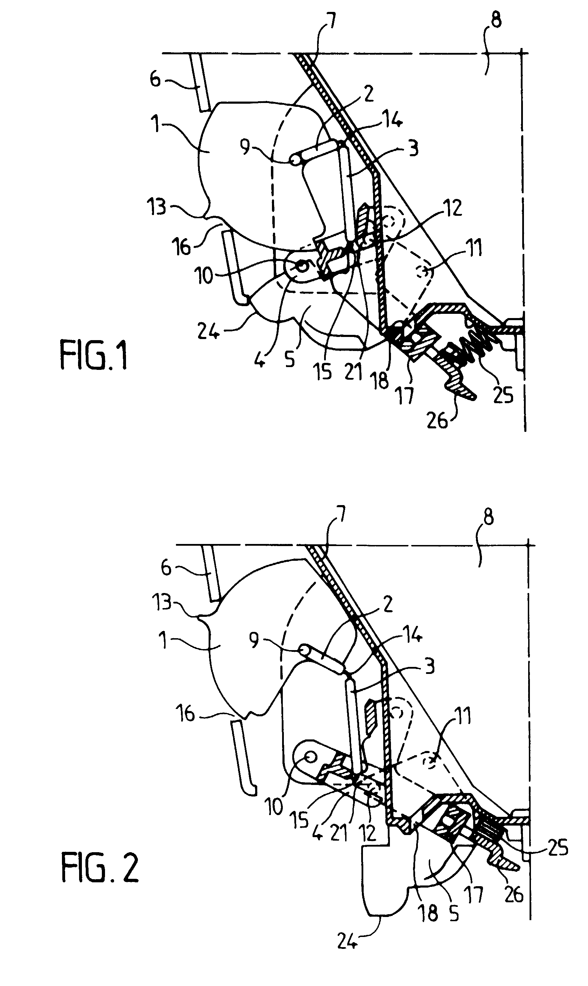

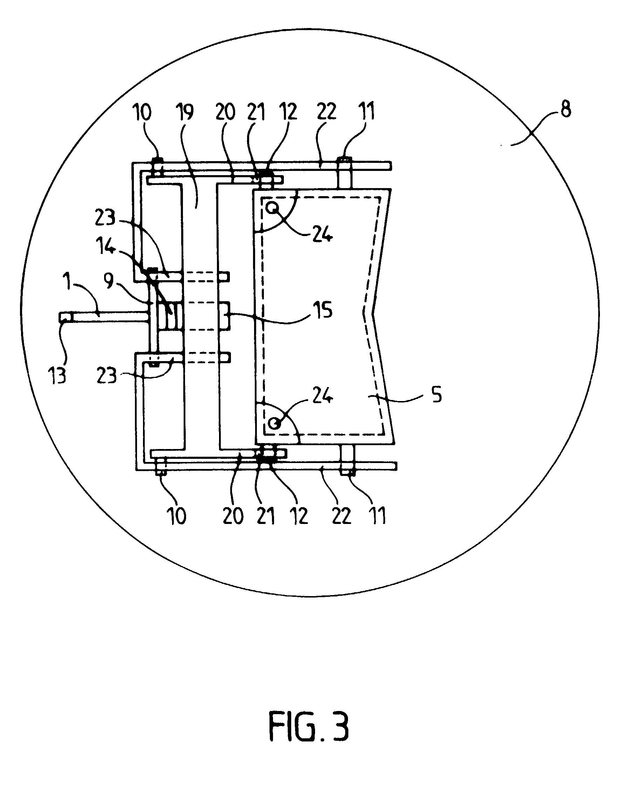

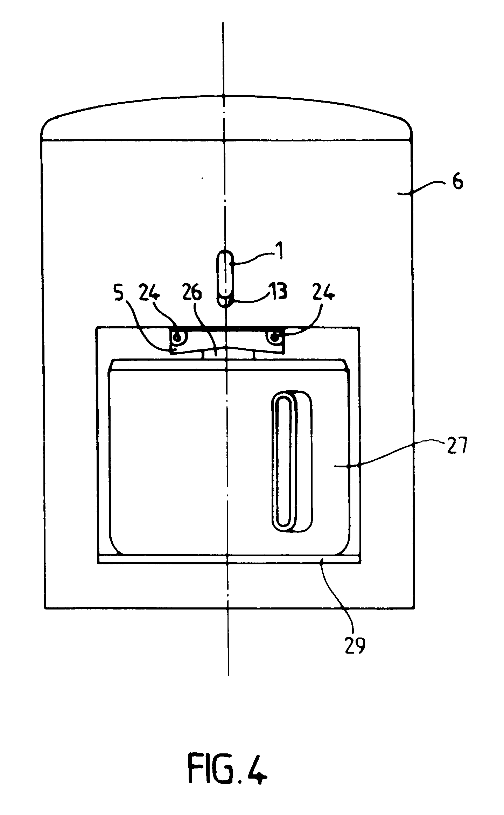

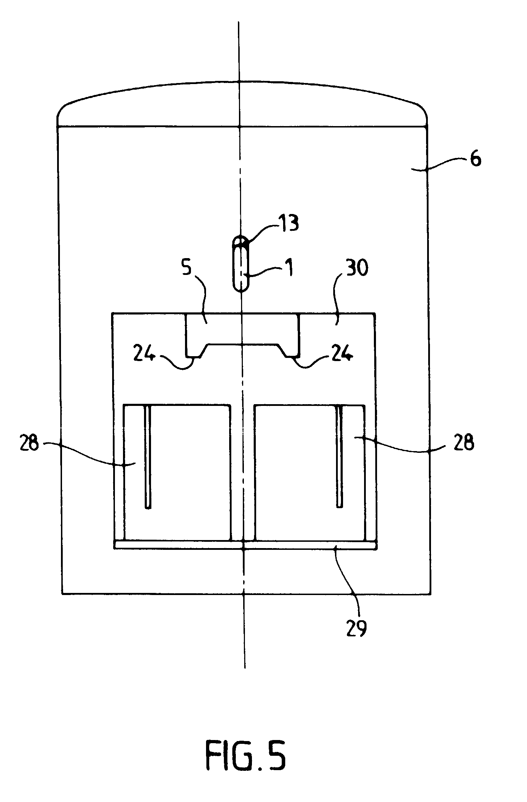

La machine à café telle qu'illustrée notamment sur la figure 4 ou la figure 5 comporte de manière connue un boîtier 6 comprenant un réservoir d'eau, des moyens de chauffe du liquide et d'amenée dudit liquide au dessus du porte-filtre (non représentés aux figures), un support 29 pour les récipients réceptacles de la boisson 27 ou 28, un porte-filtre 8 muni dans sa partie inférieure d'un orifice 18 destiné à évacuer la boisson (voir figures 1, 2 ou 3).

Les moyens d'actionnement sont situés de préférence à l'intérieur du boîtier 6, devant la paroi 7 du porte-filtre 8. Lesdits moyens sont constitués d'une manette 1 comportant un secteur circulaire présentant avantageusement un relief 13 et une partie 2 de forme plane disposée de préférence radialement de façon diamétralement opposée au relief 13, ladite manette étant traversée de manière sensiblement perpendiculaire par un axe 9, une bielle 3 dont la section est de manière avantageuse sensiblement la même que celle de la partie 2, ladite bielle 3 étant reliée à ladite partie 2 par un premier secteur 14 d'épaisseur réduite permettant une flexion importante, un élément de transmission 4 de préférence en forme de H relié à la bielle 3 par un second secteur 15 d'épaisseur réduite permettant une flexion importante, par exemple au niveau de la traverse centrale 19. L'élément de transmission 4 comporte, de préférence sur la face externe de chacun des deux montants 20 venant de part et d'autre de la traverse centrale 19, un élément d'axe 10 sensiblement perpendiculaire et avantageusement une rainure longitudinale 21. La manette 1 est disposée avantageusement derrière une lumière 16 permettant d'accéder au relief 13 située de préférence dans la partie frontale du boîtier 6.

Le second moyen de versement 5 comporte un fond percé de préférence de deux orifices 24 et deux montants munis chacun d'un premier élément d'axe 11, ainsi que d'un second élément d'axe 12, ledit élément coopérant avec l'élément de transmission 4 de préférence au moyen de la rainure longitudinale 21. Ledit moyen 5 occupe dans sa position active une position lui permettant d'être visible de façon évidente par l'utilisateur, par exemple grâce à l'ouverture 30 servant à disposer les récipients 28 (voir figure 5).

Avantageusement, le porte-filtre 8 comporte dans la partie placée en face avant de la machine deux parois parallèles 22 comprenant chacune un premier orifice destiné à recevoir l'élément d'axe 10 de l'élément de transmission 4 et un second orifice destiné à recevoir l'élément d'axe 11 du second moyen de versement 5, ainsi que deux montants parallèles 23 comportant des logements destinés à recevoir les extrémités de l'axe 9 de la manette 1.

De manière avantageuse, la machine selon l'invention comporte un moyen anti-goutte 17, qui obture l'orifice 18 grâce à un moyen de rappel 25, par exemple un ressort, lorsque le second moyen de versement 5 est placé dans sa position escamotée, tel que cela est montré dans la figure 1. Dans sa position active le second moyen de versement 5 coopère avec un élément de commande 26 du moyen anti-goutte 17 et libère l'orifice 18, tel que cela est montré dans la figure 2.

La machine selon l'invention fonctionne de la manière suivante :

A la figure 1 ou 4, on voit le relief 13 de la manette 1 en position basse. Le second moyen de versement 5 est en position escamotée. L'utilisateur place une verseuse 27 de telle manière que ladite verseuse vienne coopérer avec un élément de commande 26 du moyen anti-goutte 17 pour placer ledit moyen en position escamotée. L'utilisateur récupère ainsi le café s'écoulant par l'orifice 18 dans la verseuse 27. Lorsque l'utilisateur retire la verseuse 27, le moyen de rappel 25 ramène la pièce de commande 26 du moyen anti-goutte 17 dans une position obturant l'orifice 18. Ainsi le café restant dans le porte-filtre ne s'écoule pas en l'absence de verseuse 27.

A la figure 2 ou 5, on voit le relief 13 de la manette 1 en position haute. Le second moyen de versement 5 est en position active, visible de façon évidente et précise par l'utilisateur. De préférence, l'utilisateur place deux récipients 28 sous les orifices 24 du second moyen de versement. Le café s'écoule dès qu'il est produit dans les récipients 28, le moyen anti-goutte 17 étant en position escamotée. L'utilisateur peut également disposer un récipient unique de manière à recueillir la boisson s'écoulant des deux orifices 24.

Le passage du second moyen de versement 5 d'une position escamotée illustrée sur les figures 1 ou 4 à une position active illustrée sur les figures 2 ou 5 s'obtient en amenant la manette 1 dans la position haute à l'aide du relief 13. La rotation de la manette 1 lorsque le relief 13 est soumis à un mouvement vers le haut entraîne corrélativement la partie 2 vers le bas. Cette rotation de la manette 1 correspond à une rotation dans le sens horaire à partir de la position illustrée à la figure 1. Le mouvement est transmis à la bielle 3 par le premier secteur 14 d'épaisseur réduite, ce qui provoque un mouvement de rotation de l'élément de transmission 4 autour de l'axe 10 par l'intermédiaire du second secteur 15 d'épaisseur réduite. Le mouvement de rotation de l'élément de transmission 4 dans le sens horaire provoque une rotation dans le sens anti-horaire du second moyen de versement 5 vers sa position active par l'intermédiaire du contact des axes 12 dans les rainures longitudinales 21.

Inversement, le passage du second moyen de versement 5 d'une position active illustrée sur les figures 2 ou 5 à une position escamotée illustrée sur les figures 1 ou 4 s'obtient en amenant la manette 1 dans la position basse à l'aide du relief 13. La rotation de la manette 1 lorsque le relief 13 est soumis à un mouvement vers le bas entraîne corrélativement la partie 2 vers le haut. Cette rotation de la manette 1 correspond à une rotation dans le sens anti-horaire à partir de la position illustrée à la figure 2. Le mouvement est transmis à la bielle 3 puis à l'élément de transmission 4. Le mouvement de rotation de l'élément de transmission 4 dans le sens anti-horaire provoque la rotation dans le sens horaire du second moyen de versement 5 vers sa position escamotée par l'intermédiaire du contact des axes 12 dans les rainures longitudinales 21.

L'invention n'est nullement limitée strictement à l'exemple de réalisation décrit précédemment, mais englobe de nombreuses modifications ou améliorations. Notamment, on peut envisager que le nombre d'orifices du deuxième moyen de versement soit différent, par exemple que ces orifices soient au nombre de un ou de trois. On peut également envisager par exemple que la manette de commande soit située sur le dessus du boîtier, ou sur une autre face, et non sur sa face avant.

## Revendications

1. Machine à boisson chaude, en particulier machine à café, comportant un boîtier (6) avec un porte-filtre (8) pourvu d'un premier moyen de versement comportant un orifice (18), un second moyen de versement (5) comportant au moins deux orifices (24), susceptible d'occuper une première position active sous l'orifice (18) du premier moyen de versement et une seconde position escamotée, caractérisée en ce que le second moyen de versement (5) comporte des moyens d'actionnement (1,2,3,4,9,10) situés à distance du premier moyen de versement.

2. Machine selon la revendication 1, dans laquelle les moyens d'actionnement (1,2,3,4,9,10) comportent une manette (1) située à distance du premier moyen de versement, pivotant autour d'un axe (9) sensiblement perpendiculaire, ladite manette (1) présentant une partie (2) reliée à une bielle (3) reliée elle-même à un élément de transmission (4) pivotant autour d'un autre axe (10) orienté sensiblement perpendiculairement, l'actionnement de la manette (1) dans une première position amenant le second moyen de versement (5) dans une position escamotée, l'actionnement de la manette (1) dans une seconde position amenant le second moyen de versement (5) dans une position active où ledit moyen (5) est dans une position proéminente et visible.

3. Machine selon les revendications 1 ou 2, dans laquelle les moyens d'actionnement (1,2,3,4,9,10) sont constitués d'une seule pièce.

4. Machine selon l'une des revendications 1 à 3, dans laquelle la partie (2) de la manette (1) est reliée à la bielle (3) par un premier secteur (14) d'épaisseur réduite permettant une flexion importante, ladite bielle (3) étant reliée à un élément de transmission (4) par un second secteur (15) d'épaisseur réduite permettant une flexion importante.

5. Machine selon l'une des revendications 1 à 4, dans laquelle les moyens d'actionnement (1,2,3,4,9,10) sont placés entre la paroi (7) du porte-filtre (8) et le boîtier (6), une fenêtre (16) ménagée en partie frontale dudit boîtier (6) permettant d'actionner la manette (1) à l'aide du relief (13).

6. Machine selon l'une des revendications 1 à 5, dans laquelle le premier moyen de versement comporte un moyen anti-goutte (17) susceptible d'être basculé dans une position escamotée par le deuxième moyen de versement (5) lors de son passage dans sa position active, libérant ainsi l'orifice (18) du premier moyen de versement.

7. Machine selon l'une des revendications 1 à 6, dans laquelle les moyens d'actionnement sont réalisés en matériau polymère.
